# EUROPEAN PATENT SPECIFICATION

(11) **EP 4 563 858 B1**
(45) Date of publication and mention of the grant of the patent: **17.06.2026**
(21) Application number: 22962785.6
(22) Date of filing: 21.10.2022
(51) Int. Cl.: F16K 17/04, H01M 50/317, F16J 15/06

(54) **RELIEF VALVE**
ENTLASTUNGSVENTIL
SOUPAPE DE DÉCHARGE

(43) Date of publication of application: 04.06.2025
(73) Proprietor: Pacific Industrial Co., Ltd., Ogaki-shi, Gifu 503-8603 (JP); Toyota Jidosha Kabushiki Kaisha, Aichi 471-8571 (JP)
(72) Inventor: SUNAYAMA, Yuki, Ogaki-shi, Gifu 503-8603 (JP); KANAMORI, Kazuhiro, Ogaki-shi, Gifu 503-8603 (JP); SUGIMOTO, Junki, Toyota-shi, Aichi 471-8571 (JP); INOUE, Shigeyuki, Toyota-shi, Aichi 471-8571 (JP)
(74) Representative: Kramer Barske Schmidtchen Patentanwälte PartG mbB
(86) International application number: PCT/JP2022/039248
(87) International publication number: WO 2024/084678

(56) References cited:
- WO-A1-2019/019523
- CN-A- 113 775 799
- CN-U- 202 901 408
- CN-U- 212 517 427
- JP-A- 2006 144 887
- JP-A- 2016 114 155
- JP-U- S63 135 060
- JP-Y1- S 442 274
- US-A1- 2015 052 674

## Description

### TECHNICAL FIELD

The present invention relates to a relief valve including a packing surrounding a valve hole, in which a valve body reciprocates with respect to the packing.

### BACKGROUND ART

As this type of conventional relief valve, a relief valve is known in which a packing is attached to an outer edge of a valve hole (see, for example, JP H6-28991 U (see Fig. 3)).

CN 202901408 U, US 2015/0052674 A1, and WO 2019/019523 A1 disclose further relief valves.

### SUMMARY OF THE INVENTION

### PROBLEMS TO BE SOLVED BY THE INVENTION

In the conventional relief valve described above, in a case where a large amount of fluid is discharged from the valve hole, there is a concern that the packing is separated by the power of the fluid, and a demand exists for the development of a technique that makes it possible to make the packing difficult to separate.

### MEANS OF SOLVING THE PROBLEMS

A relief valve of the present invention is a relief valve according to claim 1. Further developments are given in the dependent claims.

### BRIEF DESCRIPTION OF THE DRAWINGS

FIG. 1 is a perspective view of a relief valve according to a first embodiment of the present invention.
FIG. 2 is an exploded perspective view of the relief valve.
FIG. 3 is a perspective view of a base part.
FIG. 4 is a cross-sectional plan view of the relief valve.
FIG. 5 is a perspective view of a valve seat seal member.
FIG. 6 is a perspective view of a valve body.
FIG. 7 is a partially enlarged cross-sectional side view of a fixing portion of the relief valve to a container wall.
FIG. 8 is a partially enlarged cross-sectional side view of the relief valve in a valve closed state.
FIG. 9 is a partially enlarged cross-sectional side view of the relief valve in a valve open state.
FIG. 10 is a partially enlarged plan view of the relief valve.
FIG. 11 is a partially enlarged cross-sectional side view illustrating a valve opening operation of the relief valve.
FIG. 12 is a cross-sectional side view of a relief valve according to a second embodiment of the present invention.
FIG. 13 is a cross-sectional plan view of the relief valve.
FIG. 14 is a cross-sectional plan view of a relief valve according to a third embodiment of the present invention.
FIG. 15 is a cross-sectional plan view of a relief valve according to a fourth embodiment of the present invention.
FIG. 16 is a cross-sectional side view of the relief valve.
FIG. 17 is a cross-sectional plan view of a relief valve according to a fifth embodiment of the present invention.
FIG. 18 is a cross-sectional side view of the relief valve.
FIG. 19 is a cross-sectional side view of an annular contact portion of a relief valve according to a sixth embodiment of the present invention.
FIG. 20 is an enlarged cross-sectional side view of an annular contact portion of a relief valve according to a seventh embodiment of the present invention.

### MODE FOR CARRYING OUT THE INVENTION

### [First embodiment]

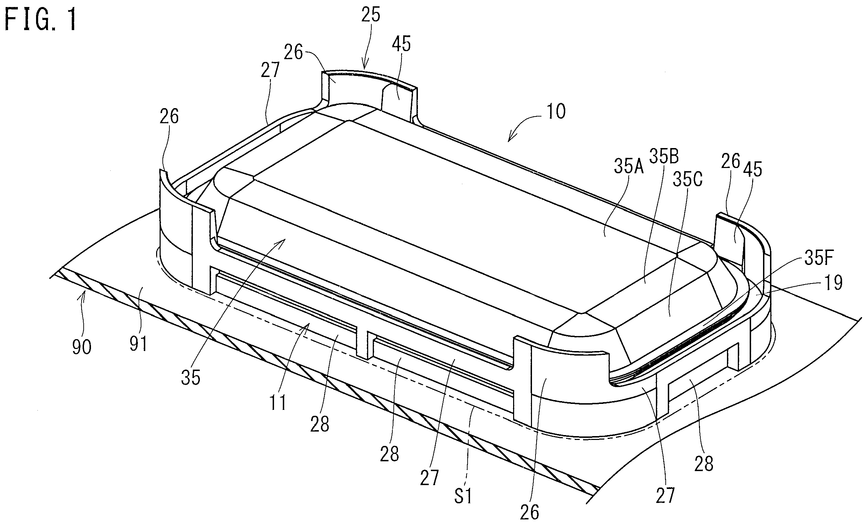

FIGS. 1 to 11 illustrate a relief valve 10 according to an embodiment of the present invention. The relief valve 10 illustrated as a whole in FIG. 1 is laid on and fixed to an outer surface of a container 90. The container 90 exemplified in the present embodiment is, for example, a battery pack for a vehicle such as a hybrid car or an electric vehicle, and accommodates one or a plurality of battery cells to protect the battery cell(s) from water, dust, and the like. The relief valve 10 of the present embodiment is used to prevent rupture of the container 90 when a failure occurs in which fluid leaks from the battery cell. The container 90 has, for example, a laterally flat rectangular parallelepiped shape, and includes an elongated container wall 91 partially illustrated in FIG. 1 on its upper surface. A plurality of the containers 90 are mounted on a vehicle in a state of being stacked in the flat direction (in a state of being disposed side by side), and the relief valve 10 is attached to the upper surface of each container 90.

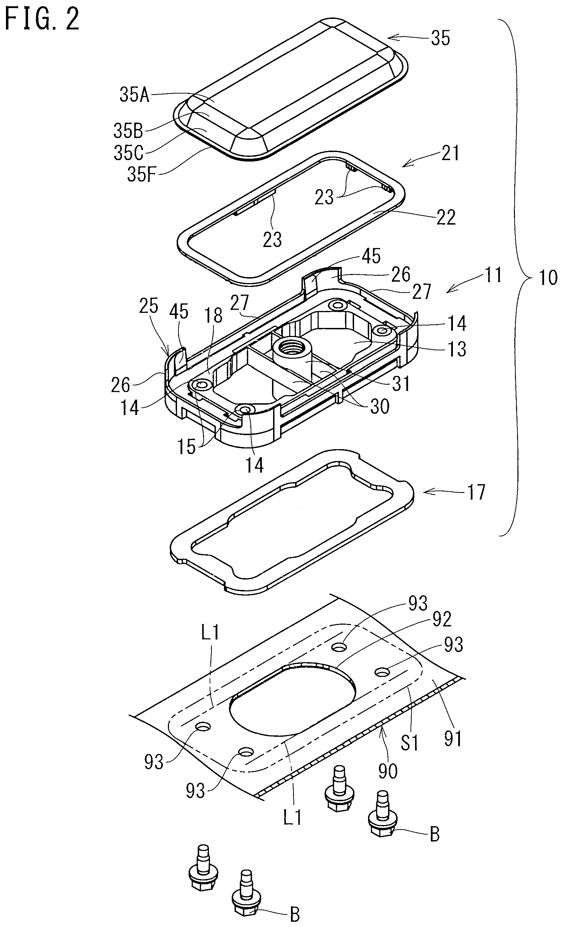

As illustrated in FIG. 2, one discharge hole 92 and a plurality of attachment holes 93 are formed in the container wall 91 on the upper surface of the container 90 so as to attach the relief valve 10. For example, the discharge hole 92 is disposed at the center in the width direction of the container wall 91, and has an elongated circle shape extending in the longitudinal direction of the container wall 91. The plurality of attachment holes 93 are disposed in pairs on the longitudinally opposite sides with the discharge hole 92 therebetween. More specifically, the plurality of attachment holes 93 are positioned between a pair of imaginary lines L1 obtained by extending a pair of straight lines facing each other in the width direction of an opening edge of the discharge hole 92, and are disposed at positions close to the pair of imaginary lines L1. The plurality of attachment holes 93 and the discharge hole 92 are disposed and shaped symmetrically in both of the width direction and the longitudinal direction of the container wall 91.

In the present embodiment, the container to which the relief valve 10 is attached is the container 90, which is, however, not limited to the battery pack, and may be any container whose internal fluid pressure changes. For example, the container to which the relief valve 10 is attached also includes a housing of an air conditioner that stores a refrigerant as the fluid. In addition, the container may be made of metal or resin. Furthermore, the container may or may not be a rigid body, and may be, for example, a bag-shaped container that is easily deformed. Moreover, although the discharge hole 92 of the present embodiment has an elongated circle shape, the shape of the discharge hole 92 may be any shape, and may be, for example, a circular shape, an elliptical shape, a polygonal shape, or an asymmetric irregular shape.

As illustrated in FIG. 2, the relief valve 10 includes a base part 11 laid on and fixed to the outer surface (upper surface) of the container wall 91. Hereinafter, for convenience of explanation, the orientation and direction of "upper side, lower side, lateral side, and the like of the relief valve 10 in FIG. 2" are simply referred to as the orientation and direction of "upper side, lower side, lateral side, and the like of the relief valve 10", but the relief valve 10 may be used in any orientation and direction.

The base part 11 is, for example, a resin molded article, and its outline has a rectangular planar shape whose four corners are chamfered in an arc shape (that is, rounded), and which serves as an installation space S1 of the relief valve 10. The rectangular shape that is the planar shape of the base part 11 is slightly larger than a rectangular shape having the plurality of attachment holes 93 at four corners in the container wall 91.

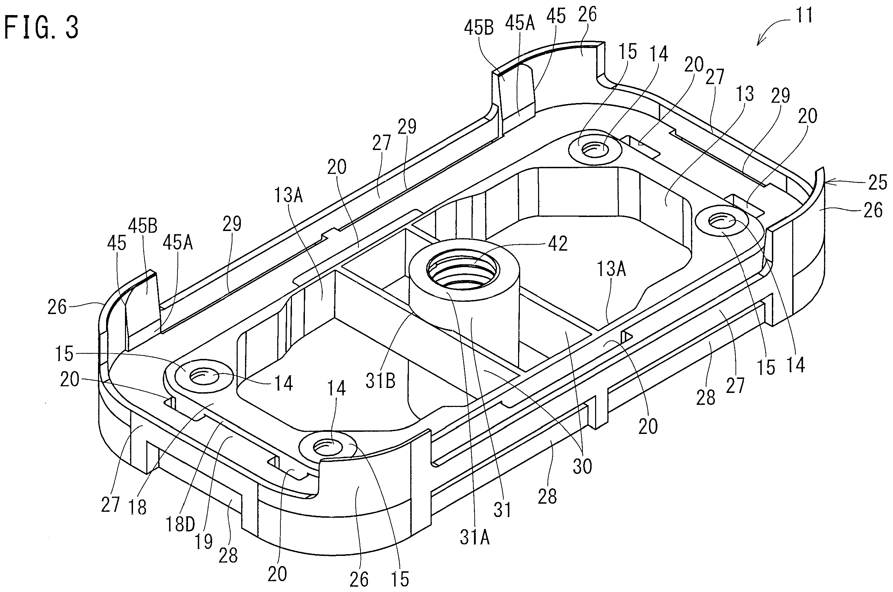

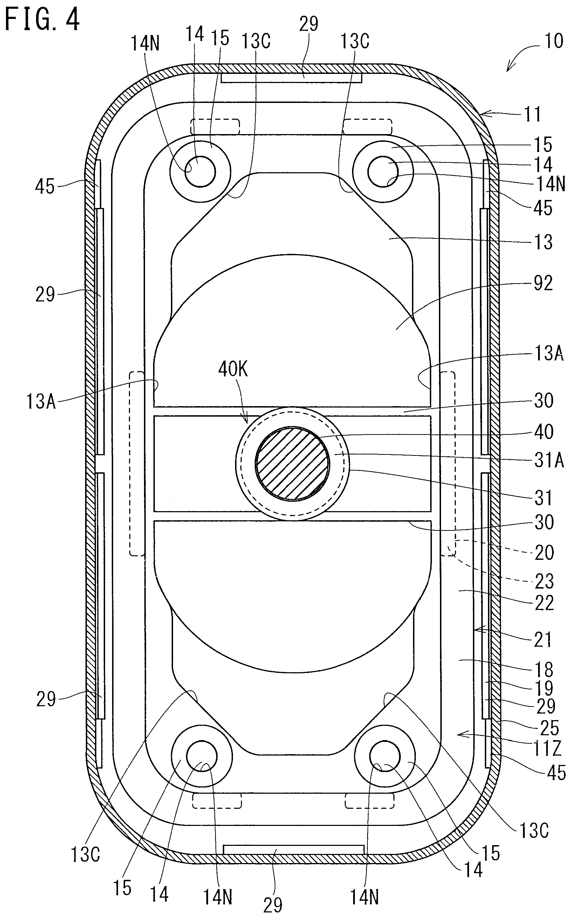

As illustrated in FIG. 3, the base part 11 has a frame shape, and its inner side is a valve hole 13. The valve hole 13 has, for example, a rectangular shape chamfered at four corners in which a pair of expanded portions 13A slightly expanded outward is provided at central portions of a pair of long sides of the rectangular shape. As illustrated in FIG. 4, a distance between the pair of expanded portions 13A is the same as the width of the discharge hole 92, the maximum length of the valve hole 13 is larger than the entire length of the discharge hole 92, and the valve hole 13 has a larger opening area than that of the discharge hole 92.

The base part 11 may be made of metal, and the planar shape of the base part 11 is not limited to the rectangular shape, and may be a shape such as a circular shape, an elliptical shape, or a polygonal shape other than the rectangular shape.

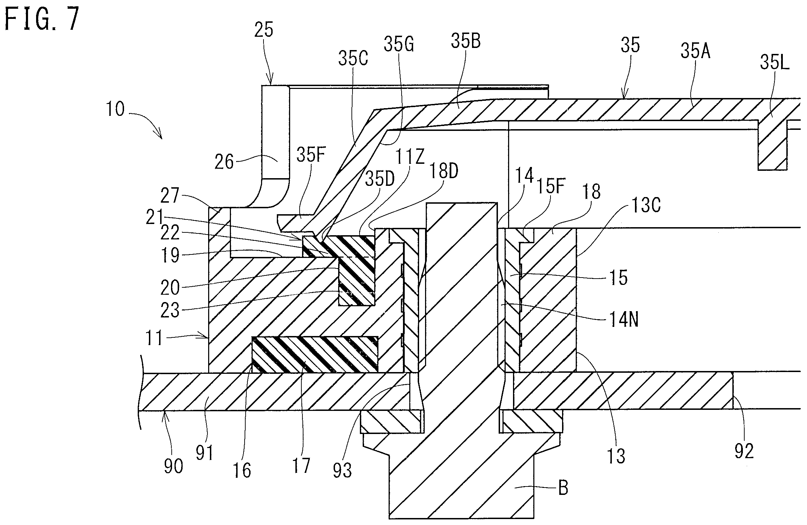

An attachment hole 14 is provided adjacent to each of chamfered surfaces 13C at the four corners of the valve hole 13. The attachment hole 14 vertically passes through the base part 11 and has a female threaded portion 14N on its inner side. Specifically, as illustrated in FIG. 7, a nut 15 is embedded in the base part 11 adjacent to each chamfered surface 13C described above. That is, the base part 11 is an insert-molded article in which a plurality of the nuts 15 are embedded. Each nut 15 includes a flange 15F protruding laterally from its upper end, and has irregularities on its outer peripheral surface. The nut 15 is embedded in a state in which an upper surface of the flange 15F is disposed flush with an upper surface of the base part 11 (specifically, an upper surface of an annular protrusion 18 to be described later). An inner surface of the nut 15 is the female threaded portion 14N of the attachment hole 14.

A plurality of the attachment holes 14 serve as a "fixing portion" of the base part 11 for fixing the base part 11 to the container wall 91, and a plurality of bolts B inserted through the plurality of attachment holes 93 of the container wall 91 from inside the container 90 are fastened to the female threaded portions 14N of the plurality of attachment holes 14, so that the base part 11 is fixed to the container wall 91. When the base part 11 is fixed to the container wall 91, inner surfaces of the pair of expanded portions 13A of the valve hole 13 are disposed so as to be substantially flush with an inner surface of the discharge hole 92, a pair of inner surfaces of the valve hole 13 facing each other in the longitudinal direction is disposed at a position away from the discharge hole 92, and substantially the entire discharge hole 92 faces the valve hole 13 (see FIG. 4).

Although the attachment holes 14 described above have the female threaded portions 14N, the attachment holes 14 may be through holes not having the female threaded portions 14N. In this case, bolts inserted through the attachment holes 14 may be fastened to nuts laid on the upper surface of the base part 11, or rivets may be inserted through the attachment holes 14 instead of the bolts and crimped at their distal ends. Furthermore, nuts may be fixed coaxially with the attachment holes 93 to an inner surface of the container wall 91, and bolts inserted into the attachment holes 14 from above may be fastened to the nuts. In addition, the "fixing portion" of the base part 11 for fixing the base part 11 to the container wall 91 does not have to be a portion through which a fastener such as a bolt or a rivet is inserted. For example, a plurality of elastic engagement pieces may protrude from the base part 11 as the fixing portion, and the elastic engagement pieces may engage with the opening edge of the discharge hole 92 of the container wall 91, opening edges of the attachment holes 93, or the like. Moreover, the base part 11 and the container wall 91 may be fixed with an adhesive, and a portion of the base part 11 to which the adhesive is applied may serve as the "fixing portion" of the base part 11.

As illustrated in FIG. 7, a lower surface groove 16 surrounding the valve hole 13 and the plurality of attachment holes 14 is formed on a lower surface of the base part 11. The lower surface groove 16 has, for example, a quadrangular groove shape (that is, has a quadrangular cross-sectional shape), and receives an annular seal member 17. As illustrated in FIG. 2, the annular seal member 17 has a rectangular frame-like plate shape as a whole, and has a shape in which central portions in inner edges of a pair of long sides, positions close to opposite ends in inner edges of a pair of short sides, and intermediate portions in outer edges of the pair of short sides are hollowed corresponding to grooves 20 and the like of the base part 11 to be described later. The lower surface groove 16 has the same planar shape as the planar shape of the annular seal member 17. In a state before the base part 11 is fixed to the container wall 91, a portion of the annular seal member 17 slightly protrudes from the lower surface of the base part 11. When the base part 11 is fixed to the container wall 91, the entire annular seal member 17 comes into contact with the outer surface of the container wall 91, and surrounds the valve hole 13 from the outer side of the plurality of attachment holes 14 to seal a space between the base part 11 and the container wall 91.

The annular seal member 17 does not have to have the frame-like plate shape as described above, and may be, for example, an O-ring or an adhesive applied between the base part 11 and the container wall 91. In addition, the annular seal member 17 may be provided so as to surround the valve hole 13 on the inner side of the plurality of attachment holes 14, and the attachment holes 14 and 93 may be separately sealed.

As illustrated in FIG. 3, on the upper surface of the base part 11, the annular protrusion 18 is formed by protruding upward in a stepped manner a rectangular region whose four corners are rounded and having the nuts 15 on the inner side of the four corners. A rectangular annular region surrounding the annular protrusion 18 serves as a seal member mounting portion 19.

Upper surfaces of the annular protrusion 18 and the seal member mounting portion 19 are flat surfaces parallel to the lower surface of the base part 11, and a step surface 18D between the annular protrusion 18 and the seal member mounting portion 19 is substantially perpendicular to the upper surfaces of the annular protrusion 18 and the seal member mounting portion 19.

The plurality of grooves 20 as a "recess" are formed in an inner edge of the seal member mounting portion 19. Each groove 20 has a quadrangular groove shape extending along the inner edge of the seal member mounting portion 19. Two grooves 20 are disposed at positions close to opposite ends in each short side portion of the seal member mounting portion 19, and one groove 20 longer than the groove 20 of the short side portion is disposed at the center in each long side portion of the seal member mounting portion 19. An inner side surface of each groove 20 on the annular protrusion 18 side is flush with and continuous with the step surface 18D of the annular protrusion 18.

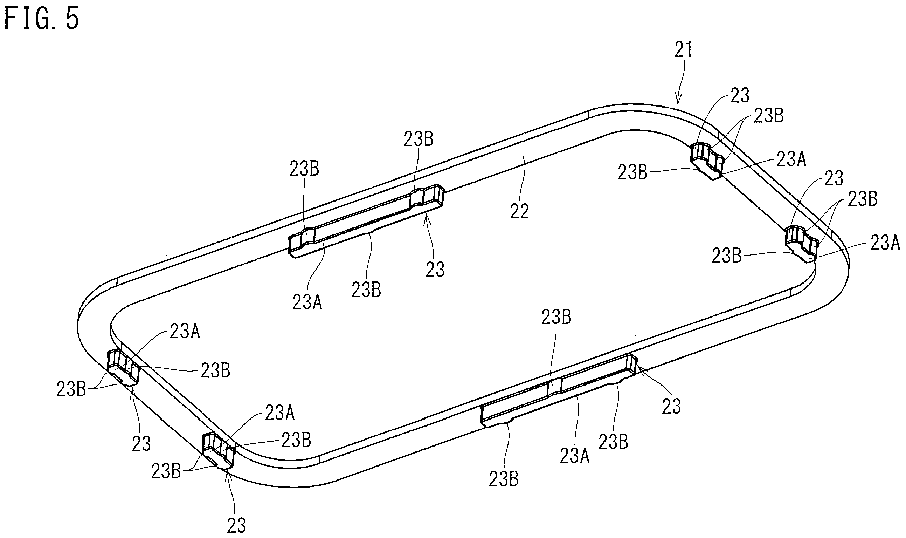

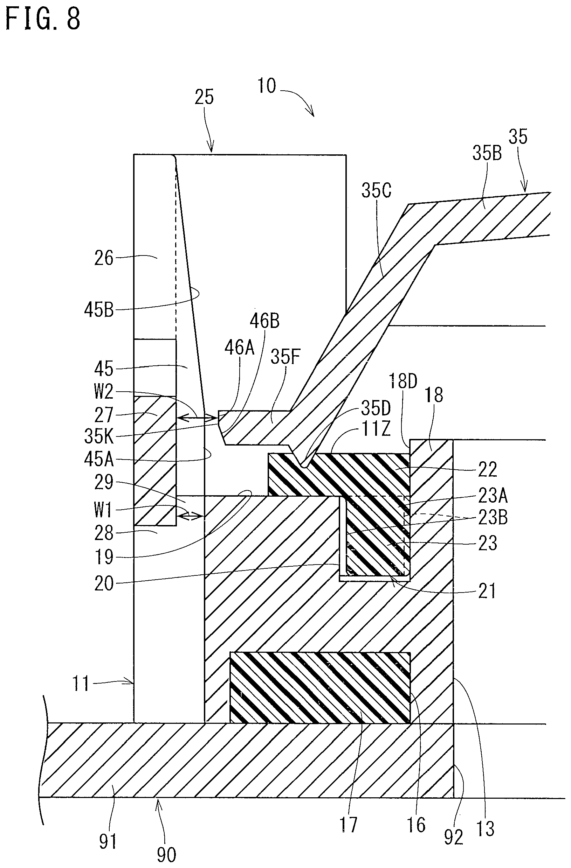

As illustrated in FIG. 8, a valve seat seal member 21 is mounted on the seal member mounting portion 19. As illustrated in FIG. 5, the valve seat seal member 21 has a structure in which a plurality of fitting protrusions 23 are suspended from a lower surface inner edge of a plate-shaped and frame-shaped main body 22 that is laid on the upper surface of the seal member mounting portion 19.

The thickness (height) of the main body 22 is slightly smaller than the height of the step surface 18D. The width of the main body 22 is smaller than the width of the seal member mounting portion 19. As illustrated in FIG. 8, the main body 22 is fitted to the outer side of the annular protrusion 18 and laid on the upper surface of the seal member mounting portion 19 to serve as a valve seat 11Z of the base part 11.

As illustrated in FIG. 5, the plurality of fitting protrusions 23 are provided corresponding to the plurality of grooves 20 of the seal member mounting portion 19, and have a structure in which a plurality of protrusions 23B are provided on a side surface of a rib 23A that is suspended from the main body 22 and extends along the longitudinal direction of each groove 20. The plurality of protrusions 23B extend vertically over the entire height of the rib 23A, and their cross-sectional shape is, for example, a flat semi-elliptical shape. Providing the plurality of protrusions 23B on each fitting protrusion 23 reduces the fitting resistance of the fitting protrusion 23 to the groove 20, and facilitates the fitting work. The plurality of protrusions 23B are provided on the side surface of the rib 23A on the annular protrusion 18 side and the side surface on the opposite side thereof, and are disposed in a staggered arrangement in which the positions of the plurality of protrusions 23B are deviated from each other on the opposite side surfaces. As a result, the fitting protrusion 23 is deformed so as to meander slightly and easily fits into the groove 20.

In the valve seat seal member 21 of the present embodiment, for example, a lip protruding toward a valve body 35 may be formed on an outer edge of the main body 22. At this time, the lip may protrude to a higher position than the upper surface of the annular protrusion 18. Regardless of the presence or absence of the lip, the inner edge of the main body 22 preferably has a thickness (height) to be flush with or lower than the upper surface of the annular protrusion 18. In addition, the valve seat seal member 21 has a structure in which the fitting protrusions 23 are provided on the plate-shaped and frame-shaped main body 22 which is similar to the annular seal member 17. However, the valve seat seal member 21 does not have to have the fitting protrusions 23, or does not have to have a plate shape. That is, the valve seat seal member 21 may also be an O-ring similarly to the annular seal member 17. In addition, in a case where the fitting protrusion 23 is provided, the fitting protrusion 23 may have an annular shape disposed over the entire periphery of the inner edge of the valve seat seal member 21, and the groove 20 may be an annular groove correspondingly. The fitting protrusion 23 may have a columnar shape having a circular shape, an elliptical shape, a polygonal shape, or the like in cross section, and a recess corresponding to the columnar fitting protrusion 23 may be provided instead of the groove 20. Furthermore, the plurality of protrusions 23B may be provided on only one of the opposite side surfaces of the rib 23A, or may be disposed at the same positions on the opposite side surfaces when provided on the opposite side surfaces of the rib 23A. Moreover, the shape of the plurality of protrusions 23B is not limited to the protruding strip shape extending in the vertical direction, and may be, for example, a hemispherical shape. Furthermore, the plurality of protrusions 23B may be formed on the inner side surface of the groove 20 instead of the fitting protrusion 23. The materials of the valve seat seal member 21 and the annular seal member 17 described above may be any material that is an elastic body, and may be rubber, resin, foamed elastic body, or the like.

As illustrated in FIG. 3, a valve body surrounding wall 25 protrudes upward from an entire outer edge of the base part 11 (which is also an outer edge of the seal member mounting portion 19). The valve body surrounding wall 25 includes, for example, a plurality of first walls 26 disposed at the four corners of the outer edge of the base part 11, and a plurality of second walls 27 each disposed between adjacent first walls 26 and lower than the first walls 26.

Specifically, the plurality of first walls 26 are formed from positions close to the corners in the outer edge on the pair of long sides of the outer edge of the base part 11 to middle positions of the arcs at the corners, and the second walls 27 are formed in the other portions. As illustrated in FIG. 8, the height of the second walls 27 from the upper surface of the seal member mounting portion 19 is slightly higher than the annular protrusion 18, and the height of the first walls 26 is, for example, about 2 to 4 times the height of the second walls 27.

As illustrated in FIG. 3, on a side surface of the base part 11, a plurality of recesses 28 are formed in portions below the respective second walls 27. As illustrated in FIG. 8, each recess 28 is formed by recessing a portion slightly below the upper surface of the seal member mounting portion 19 to a position inward from an inner surface of the second wall 27. As illustrated in FIG. 3, the recess 28 below each of the paired second walls 27 on the short sides is formed in a range excluding opposite ends in the longitudinal direction of the second wall 27. On the other hand, the recess 28 below each of the paired second walls 27 on the long sides is formed in an entire range excluding the longitudinal center of the second wall 27. In the base part 11, a slit-shaped drain hole 29 is formed by piercing a portion of each recess 28 closer to the valve hole 13 than the inner side surface of the second wall 27 to the upper surface of the seal member mounting portion 19.

As illustrated in FIG. 3, a pair of bridging members 30 is bridged between the pair of expanded portions 13A of the valve hole 13. The pair of bridging members 30 has a band plate shape extending in parallel with the width direction of the base part 11 and facing each other in the longitudinal direction of the base part 11. Upper surfaces of the pair of bridging members 30 are flush with the upper surface of the annular protrusion 18, and lower surfaces of the pair of bridging members 30 are flush with the lower surface of the entire base part 11.

A cylindrical shaft fitting portion 31 extending in the vertical direction is provided at a central portion serving as the center of figure of the planar shape of the base part 11 and is supported by the pair of bridging members 30. The shaft fitting portion 31 has a cylindrical shape with open opposite ends, and includes a spring contact wall 31A protruding inward from its upper end. A pair of recesses 31B is formed at two positions in the circumferential direction at a position near the upper end in the vertical direction on an outer surface of the shaft fitting portion 31, and the pair of bridging members 30 and the shaft fitting portion 31 are integrally formed so as to have a structure in which the pair of recesses 31B receives the pair of bridging members 30.

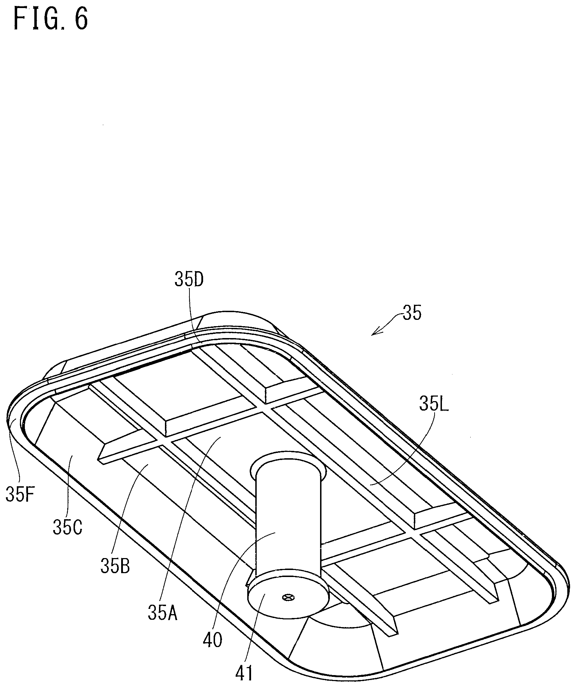

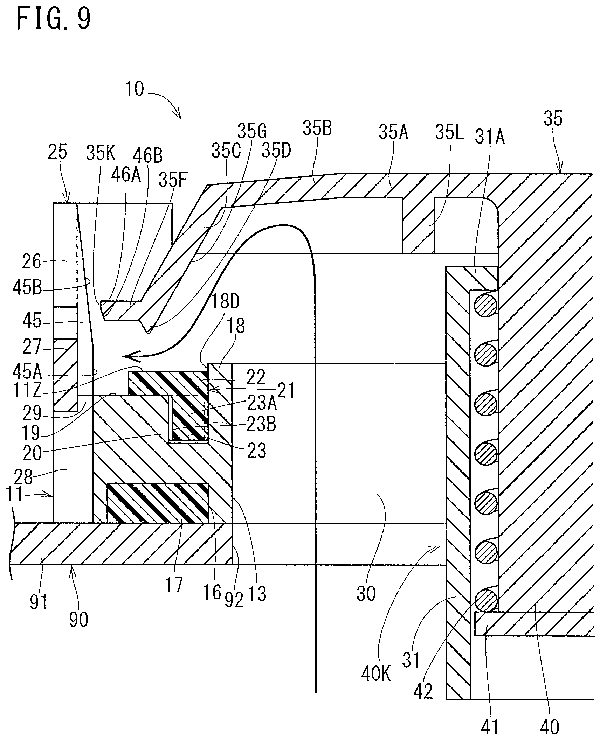

FIG. 6 illustrates the entire valve body 35 of the relief valve 10. The valve body 35 is, for example, a resin molded article, and has a thin dish shape, as a whole, bulging upward and having an open lower surface, and the outline of its planar shape has a rectangular shape similar to and smaller than the outline of the planar shape of the base part 11. A reinforcing rib 35L is formed on an inner surface of the valve body 35, and a shaft 40 is suspended from the center of the inner surface of the valve body 35. As illustrated in FIG. 9, the valve body 35 is supported so as to be slidable in the vertical direction by a slide support mechanism 40K having the above-described shaft fitting portion 31 and the shaft 40 fitted thereto as main parts, and is received inside the valve body surrounding wall 25.

Specifically, the valve body 35 includes, as illustrated in FIG. 2, a rectangular flat plate 35A, a first annular inclined portion 35B that is inclined so as to gradually descend as laterally away from the flat plate 35A, a second annular inclined portion 35C that is inclined so as to descend at an angle larger than that of the first annular inclined portion 35B as laterally away from the first annular inclined portion 35B, a flange 35F that protrudes laterally from a lower end of the second annular inclined portion 35C, and an annular contact portion 35D that protrudes downward from an inner edge of a common lower surface of the second annular inclined portion 35C and the flange 35F as illustrated in FIG. 9. The reinforcing rib 35L has a lattice shape, and a lower surface of the reinforcing rib 35L is disposed at an intermediate position in the vertical direction of the second annular inclined portion 35C.

The annular contact portion 35D has a substantially triangular shape in cross section and has an inclined surface flush with an inner surface of the second annular inclined portion 35C. When the valve body 35 is disposed at a normal position as an ideal position in design, the entire annular contact portion 35D comes into contact with the main body 22 of the valve seat seal member 21 as the valve seat 11Z, on the outer side of the fitting protrusions 23.

The shaft 40 described above has a columnar shape and is fitted to the inner side of the spring contact wall 31A of the shaft fitting portion 31. A disk 41 is laid on and screwed to a lower surface of the shaft 40 coaxially with the shaft 40. The outer diameter of the disk 41 is larger than that of the shaft 40 and smaller than the inner diameter of the shaft fitting portion 31. The disk 41 protrudes laterally from the shaft 40 in the shaft fitting portion 31 and vertically faces the spring contact wall 31A, and a compression coil spring 42 is accommodated in a stretched state between the spring contact wall 31A and the disk 41. As a result, the valve body 35 is supported so as to be reciprocable in the vertical direction with respect to the base part 11, and the valve body 35 is biased toward the valve closing side to be in contact with the valve seat 11Z. The annular contact portion 35D of the valve body 35 bites into the valve seat seal member 21 of the valve seat 11Z by being biased by the compression coil spring 42.

In order to regulate the rotation of the valve body 35 about the shaft 40, the following rotation regulating mechanism mainly including the flange 35F of the valve body 35 and a lateral-side guide portion 45 described below is provided. That is, as illustrated in FIG. 3, one ends in the width direction of the plurality of first walls 26 of the valve body surrounding wall 25 described above are positioned at opposite ends of a pair of long-side straight line portions of the rectangular shape that is the planar shape of the valve body surrounding wall 25, and the lateral-side guide portion 45 protrudes from an inner surface of the one end in the width direction of each first wall 26.

As illustrated in FIG. 9, a distal end surface of each lateral-side guide portion 45 facing the valve body 35 forms a vertical surface 45A parallel to the vertical direction, from a lower end to an intermediate position in the vertical direction, and forms an inclined surface 45B inclined so as to laterally separate from the valve body 35 toward an upper end from the intermediate position. A boundary between the vertical surface 45A and the inclined surface 45B is positioned slightly below an upper surface of the second wall 27 of the valve body surrounding wall 25.

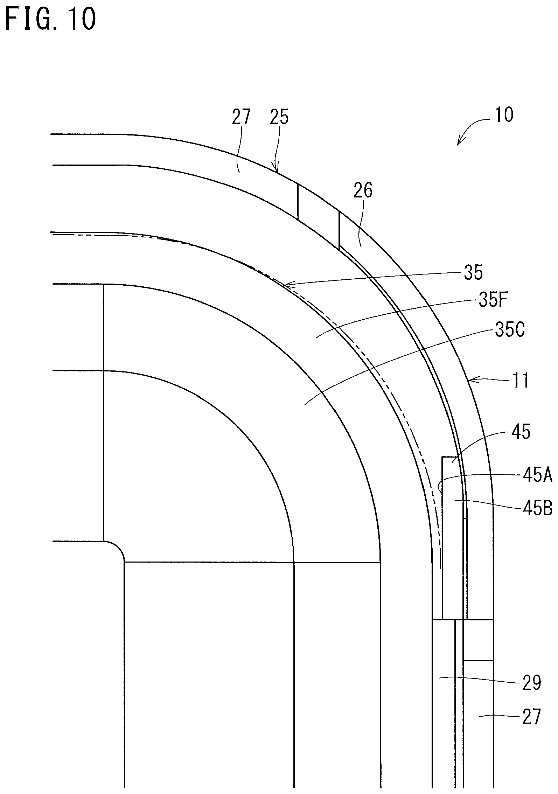

As illustrated in FIG. 10, when the relief valve 10 is viewed from above, an end of each straight line portion of the pair of long sides of the rectangular shape that is the planar shape of the valve body 35 faces one side from an intermediate position in the width direction of the corresponding lateral-side guide portion 45, and a rounded portion at each corner of the rectangular shape that is the planar shape of the valve body 35 faces the other side from the intermediate position in the width direction of the corresponding lateral-side guide portion 45. This prevents one of the valve body 35 and the lateral-side guide portion 45 from biting into the other.

Meanwhile, as illustrated in FIG. 8, a distal end surface of the flange 35F of the valve body 35 includes a vertical surface 46A on the upper side from an intermediate position in the vertical direction and an inclined surface 46B on the lower side from the intermediate position. The vertical surface 46A is substantially parallel to the vertical direction, and the inclined surface 46B is inclined toward the side approaching the annular contact portion 35D as it goes downward. An obtuse angle portion 35K protruding toward the lateral-side guide portion 45 is formed at an intersecting portion between the vertical surface 46A and the inclined surface 46B. When the annular contact portion 35D of the valve body 35 bites into the valve seat seal member 21, an upper surface of the flange 35F of the valve body 35 is positioned at substantially the same height as the boundary between the vertical surface 45A and the inclined surface 45B, and the vertical surface 46A of the valve body 35 faces the vertical surface 45A of the lateral-side guide portion 45 with a slight gap therebetween.

The configuration of the relief valve 10 of the present embodiment has been described above. Next, the operational effects of the relief valve 10 will be described. As illustrated in FIG. 7, when the base part 11 of the relief valve 10 is fixed to the container wall 91, a space between the base part 11 and the container wall 91 is sealed by the annular seal member 17 sandwiched therebetween. Here, the annular seal member 17 surrounds the valve hole 13 at a position farther from the valve hole 13 than the plurality of attachment holes 14 in the base part 11, and further, the valve seat seal member 21 of the valve seat 11Z that seals a space between the base part 11 and the valve body 35 also surrounds the valve hole 13 at a position farther from the valve hole 13 than the plurality of attachment holes 14. Therefore, the annular seal member 17 and the valve seat seal member 21 can seal the plurality of attachment holes 14 and 93 of the base part 11 and the container wall 91 as well as sealing a space between the container 90 and the base part 11.

In addition, in the relief valve 10, since the plurality of nuts 15 are embedded in the base part 11 and the insides of the nuts 15 are the female threaded portions 14N in the attachment holes 14, the attachment work to the container 90 can be easily performed as compared with a case where the nuts 15 are provided separately from the base part 11.

In the relief valve 10, in a normal state where the inside of the container 90 has a predetermined pressure or less, the annular contact portion 35D of the valve body 35 is pressed against the valve seat seal member 21 of the valve seat 11Z by the resilient force of the compression coil spring 42 to hold the valve body 35 in a valve closed state. When the pressure in the container 90 becomes equal to or higher than the predetermined pressure over the resilient force of the compression coil spring 42, the valve body 35 is brought into a valve open state. Here, the container 90 to which the relief valve 10 of the present embodiment is attached accommodates the battery cell as described above. When a failure occurs in which fluid leaks from the battery cell, the pressure in the container 90 may rise abruptly. To address the problem, in the relief valve 10 of the present embodiment, the valve seat 11Z is provided so as to surround the attachment holes 14 for fixing the base part 11 to the container 90 as described above. Thus, if the relief valve 10 has the same installation space as that of a conventional relief valve in which the attachment holes 14 are disposed outside the valve seat 11Z, the peripheral length of the valve seat 11Z increases, and the amount of dischargeable fluid can be increased. As a result, in the relief valve 10 of the present embodiment, as soon as the valve closed state illustrated in FIG. 8 is changed to the valve open state illustrated in FIG. 9, a large amount of fluid is discharged at once, which makes it possible to cope with the instant increase in the pressure in the container 90.

In addition, since the valve body 35 of the relief valve 10 has a shape bulging toward the side away from the valve hole 13, the valve body 35 easily receives the dynamic pressure of the fluid in the valve open state, and easily moves to the valve opening side. Moreover, the valve hole 13 of the relief valve 10 is larger than the discharge hole 92. This also makes it possible to discharge a large amount of fluid at once immediately after the valve body 35 is opened.

As described above, in a case where a large amount of fluid is discharged from the valve hole 13, there is a concern that the valve seat seal member 21 is separated by the power of the fluid. To address the problem, in the relief valve 10 of the present embodiment, since a distal end surface of the annular protrusion 18 positioned between the valve seat seal member 21 and the valve hole 13 is positioned ahead of the valve seat seal member 21 in the protruding direction of the annular protrusion 18, the valve seat seal member 21 does not directly receive the dynamic pressure of the fluid discharged from the valve hole 13. As a result, even when a large amount of fluid is discharged abruptly upon valve opening, the valve seat seal member 21 is prevented from being separated due to the dynamic pressure of the fluid.

In addition, the base part 11 is provided with the grooves 20 on the outer side of the annular protrusion 18, and the fitting protrusions 23 of the valve seat seal member 21 are fitted to the grooves 20. This also makes it possible to make the valve seat seal member 21 difficult to separate. Furthermore, since the plurality of protrusions 23B are formed on each fitting protrusion 23, the valve seat seal member 21 can be made more difficult to separate. Moreover, since the plurality of protrusions 23B extend along the fitting direction with respect to each groove 20, the fitting work of the fitting protrusion 23 to the groove 20 can be easily performed.

Furthermore, as indicated by the arrow in FIG. 9, a fluid guide portion 35G that is the inner surface of the second annular inclined portion 35C of the valve body 35 guides the discharged fluid from above toward the valve seat seal member 21, and thus the dynamic pressure of the fluid acts in the direction of deepening the fitting of the valve seat seal member 21 to the annular protrusion 18. This also prevents the valve seat seal member 21 from being separated due to the dynamic pressure of the fluid.

In addition, since the relief valve 10 of the present embodiment is provided with the lateral-side guide portions 45 that regulate the rotation of the valve body 35 separately from the slide support mechanism 40K that supports the valve body 35 linearly movably, a load on the slide support mechanism 40K is reduced, and the moving operation of the valve body 35 becomes smooth. Moreover, since the lateral-side guide portions 45 face the valve body 35 from the lateral side and are disposed away from the slide support mechanism 40K, the lateral-side guide portions 45 can effectively prevent the rotation of the valve body 35.

Moreover, as illustrated in FIG. 8, the valve body 35 includes the flange 35F that protrudes laterally toward the lateral-side guide portions 45, and the obtuse angle portion 35K that protrudes toward the lateral-side guide portions 45 is provided on the distal end surface of the flange 35F. Therefore, surface contact between the valve body 35 and the lateral-side guide portions 45 is prevented, and frictional resistance between the valve body 35 and the lateral-side guide portions 45 when the valve body 35 linearly moves is reduced.

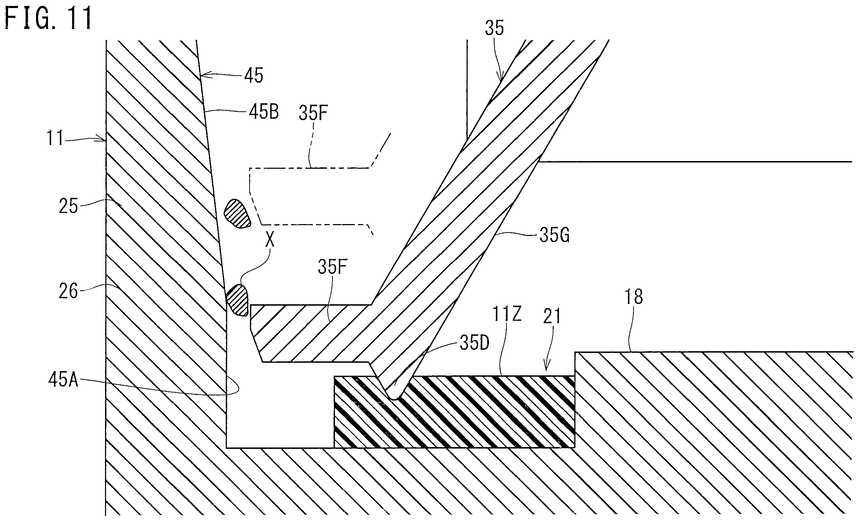

In addition, as illustrated in FIG. 11, the inclined surface 45B that is inclined so as to separate from the valve body 35 as away from the base part 11 is provided on the inner surface of each lateral-side guide portion 45. As a result, a gap between the valve body 35 and the inner surface of the lateral-side guide portion 45 increases as the valve body 35 is opened. This prevents the valve body 35 from being locked in the valve closed state with a foreign matter X caught between the valve body 35 and the lateral-side guide portion 45. Moreover, the inclined surface 45B faces the distal end surface of the flange 35F in the valve closed state. As a result, the gap between the distal end surface of the flange 35F and the inner surface of the lateral-side guide portion 45 increases by merely opening the valve body 35 slightly from the valve closed state, and the valve body 35 is easily opened from the valve closed state even when the foreign matter X is caught in the gap.

In addition, as illustrated in FIG. 1, the valve body 35 is surrounded by the valve body surrounding wall 25 protruding from the base part 11, and thus, is protected from collision with a foreign matter or the like. Furthermore, since the valve body surrounding wall 25 is open on the side away from the base part 11 and a valve opening-side facing wall to face the valve body 35 from the valve opening side is not provided, it is possible to prevent a failure in which a foreign matter is caught between the valve body 35 and the valve opening-side facing wall and the valve body 35 is locked in the valve closed state.

In addition, since the valve body surrounding wall 25 includes the plurality of first walls 26 and the plurality of second walls 27 lower than the first walls 26, it is possible to reduce the discharge resistance of the fluid at the time of valve opening while protecting the valve body 35.

In addition, as illustrated in FIG. 8, even when water enters into the valve body surrounding wall 25, the water is discharged from the drain hole 29 to the outside, so that water is prevented from entering the container 90 at the time of valve opening. Moreover, an opening width W1 of the drain hole 29 is smaller than a distance W2 between the valve body 35 in the valve closed state and the valve body surrounding wall 25. Therefore, when the valve body 35 is slightly opened and the fluid is discharged from the valve hole 13, a larger amount of fluid flows to the side between the valve body 35 and the valve body surrounding wall 25 than to the drain hole 29. In a case where the foreign matter X (see FIG. 11) such as dust is caught between the valve body 35 and the valve body surrounding wall 25, the foreign matter can be blown off from the gap to the side opposite to the drain hole 29.

### [Second embodiment]

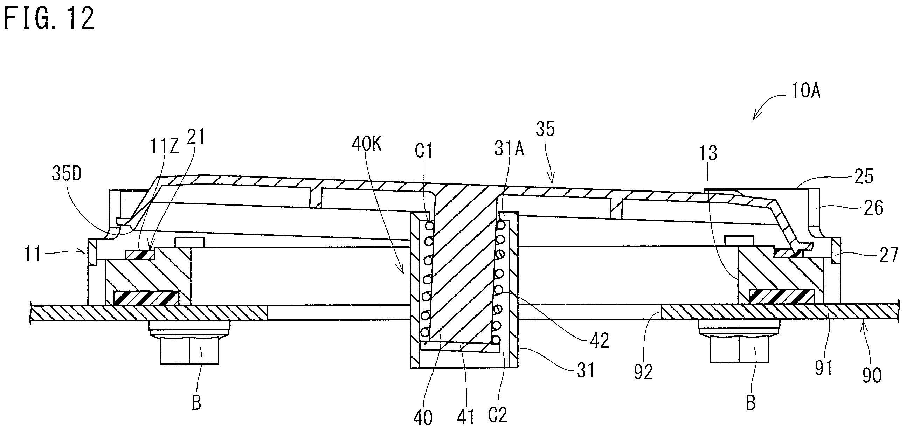

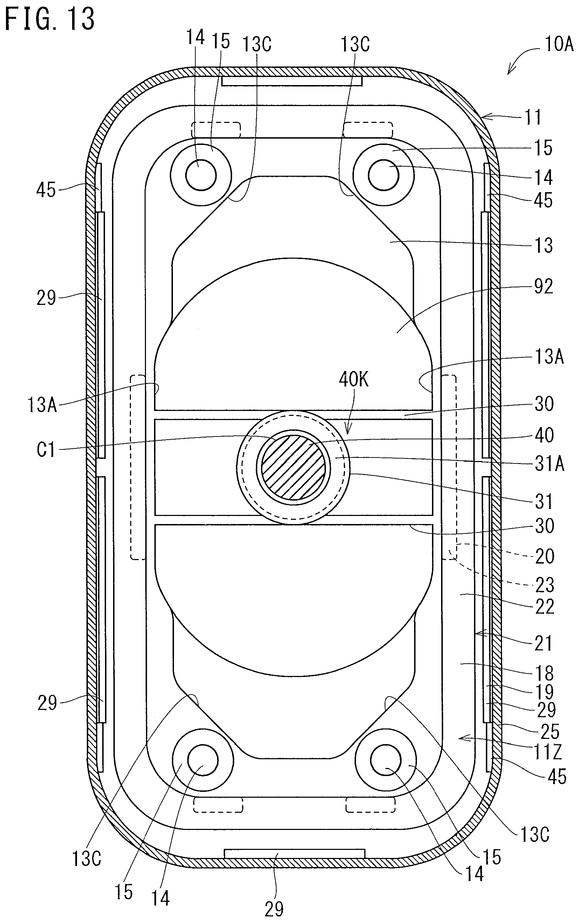

Hereinafter, a second embodiment of the present invention will be described with reference to FIGS. 12 and 13. As illustrated in FIG. 12, a relief valve 10A of the present embodiment is different from the relief valve 10 of the first embodiment in that the slide support mechanism 40K that slidably supports the valve body 35 is provided with clearances C1 and C2 that allow only a portion in the circumferential direction of the annular contact portion 35D to be in a partial contact state contacting the valve seat seal member 21.

Specifically, in the relief valve 10A of the present embodiment, the inner diameter of the shaft fitting portion 31 and the inner diameter of the spring contact wall 31A described above, and the inner diameter of a main body of the shaft fitting portion 31 other than the spring contact wall 31A are slightly larger than those in the relief valve 10 of the first embodiment. The clearance C1 (see FIG. 13) described above is provided between an inner surface of the spring contact wall 31A and an outer surface of the shaft 40, and the clearance C2 is provided between an inner surface of the main body of the shaft fitting portion 31 and an outer surface of the disk 41. Other configurations are the same as those of the relief valve 10 of the first embodiment.

As described above, the slide support mechanism 40K of the relief valve 10A of the present embodiment is provided with the clearances C1 and C2 that allow only a portion in the circumferential direction of the annular contact portion 35D to be in the partial contact state contacting the valve seat seal member 21. As a result, when the valve body 35 is opened from a state in which the relief valve 10A has been maintained in the valve closed state for a long time and the entire periphery of the annular contact portion 35D adheres to the valve seat seal member 21, the valve body 35 tilts and the annular contact portion 35D gradually separates from the valve seat seal member 21, which reduces the resistance at the time of valve opening and stabilizes the valve opening operation.

### [Third embodiment]

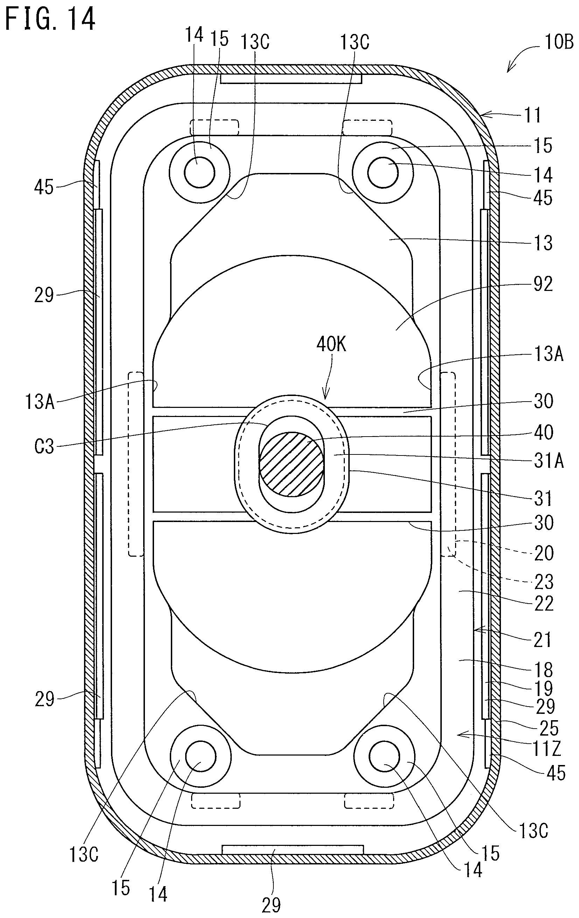

Hereinafter, a third embodiment of the present invention will be described with reference to FIG. 14. As illustrated in FIG. 14, a relief valve 10B of the present embodiment is different from the relief valve 10A of the second embodiment in that a clearance C3 that allows only a portion in the circumferential direction of the annular contact portion 35D to be in a partial contact state contacting the valve seat seal member 21 is provided only in the longitudinal direction of the planar shape of the valve body 35. Specifically, in the relief valve 10B of the present embodiment, the planar cross-sectional shape of the shaft fitting portion 31 including the spring contact wall 31A is an elongated circle shape elongated in the longitudinal direction of the rectangular shape in the planar shape of the valve body 35, and the above-described clearance C3 is provided. Configurations other than those described above are the same as those of the relief valve 10A of the second embodiment. The relief valve 10B of the present embodiment also achieves the same operational effects as the relief valve 10A of the second embodiment.

### [Fourth embodiment]

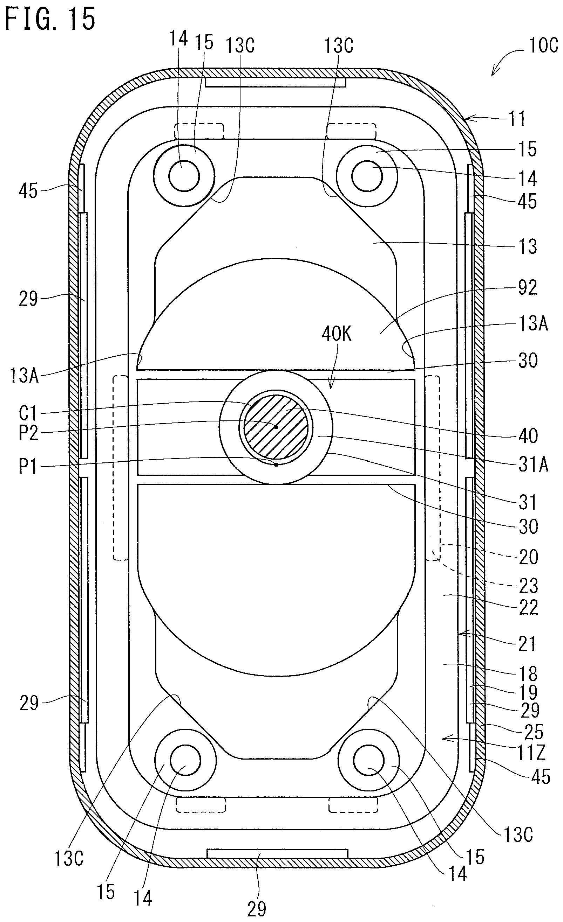

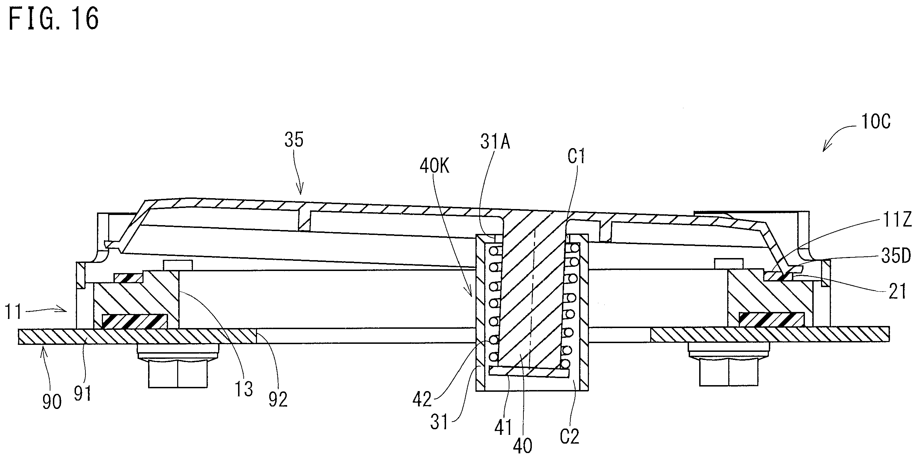

Hereinafter, a fourth embodiment of the present invention will be described with reference to FIGS. 15 and 16. As illustrated in FIG. 15, a relief valve 10C of the present embodiment is different in that the position of the shaft 40 and the shaft fitting portion 31 fitted thereto is deviated from the position in the relief valve 10A of the second embodiment. Specifically, in the relief valve 10A of the second embodiment, as viewed from the axial direction of the shaft 40, the center of the shaft 40 is disposed at the same position as a center of figure P1 of a region surrounded by the valve seat 11Z (see FIG. 13). However, in the relief valve 10C of the present embodiment, a center P2 of the shaft 40 is disposed to be deviated from the center of figure P1 of the region surrounded by the valve seat 11Z in the longitudinal direction of the region. In the present embodiment, as illustrated in FIG. 16, the compression coil spring 42 is, for example, a tapered coil spring whose diameter increases upward. This reliably prevents the compression coil spring 42 from being caught between the inner surface of the spring contact wall 31A and the shaft 40. Configurations other than those described above are the same as those of the relief valve 10A of the second embodiment.

According to the configuration of the present embodiment, the valve body 35 tilts with respect to the linear movement direction by receiving the pressure in the container 90, and the resistance at the time of valve opening is reduced.

### [Fifth embodiment]

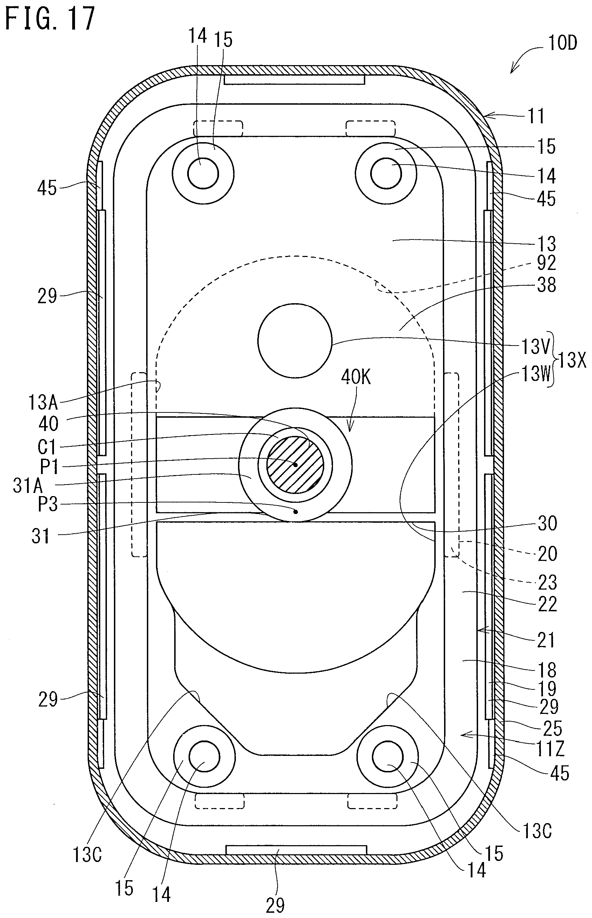

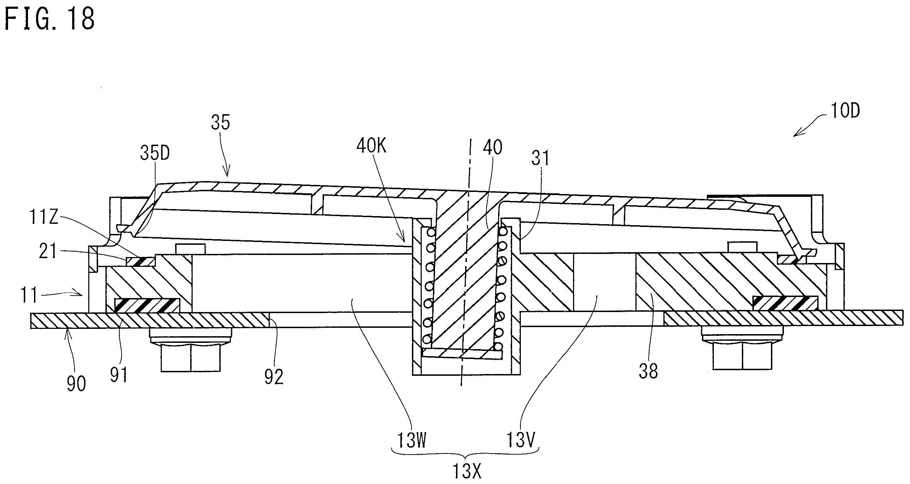

Hereinafter, a fifth embodiment of the present invention will be described with reference to FIGS. 17 and 18. As illustrated in FIG. 17, a relief valve 10D of the present embodiment is different from the relief valve 10A of the second embodiment only in the shape of the valve hole 13. That is, the relief valve 10D of the present embodiment has a structure in which an area from one bridging member 30 to one end of the valve hole 13 of the valve hole 13 (hereinafter, referred to as the "original valve hole 13") of the relief valve 10A of the above second embodiment is closed by a wall body 38, a valve hole 13V is formed at a position facing the discharge hole 92 in the wall body 38, and a valve hole 13W that is a portion of the original valve hole 13 not closed by the wall body 38 and the valve hole 13V are combined to form a valve hole 13X of the entire relief valve 10D. As a result, as viewed from the axial direction of the shaft 40, the center of figure P1 of the region surrounded by the valve seat 11Z and a center of figure P3 of the valve hole 13X are deviated from each other. Configurations other than those described above are the same as those of the relief valve 10A of the second embodiment.

According to the relief valve 10D of the present embodiment, in a case where the pressure in the container 90 rises abruptly, the dynamic pressure of the fluid flowing through the container 90 acts non-uniformly on the valve body 35, the valve body 35 tilts as illustrated in FIG. 18, and the resistance at the time of valve opening is reduced.

### [Sixth embodiment]

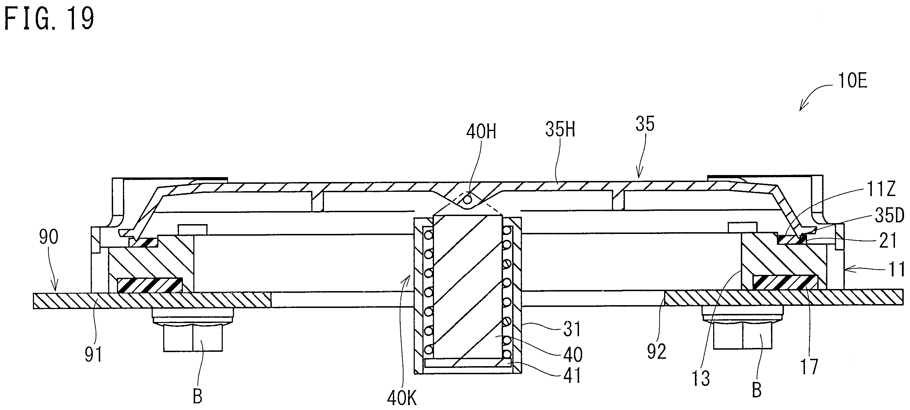

Hereinafter, a sixth embodiment of the present invention will be described with reference to FIG. 19. As illustrated in FIG. 19, in a relief valve 10E of the present embodiment, the valve body 35 of the relief valve 10 of the first embodiment is divided into the shaft 40 and a valve body main body 35H other than the shaft 40, and an upper end of the shaft 40 is connected to the valve body main body 35H by a hinge 40H. That is, the slide support mechanism 40K includes the hinge 40H. The rotation axis of the hinge 40H extends in the transverse direction of the rectangular shape of the planar shape of the valve body 35. The hinge 40H allows the valve body main body 35H to tilt so that only a portion in the circumferential direction of the annular contact portion 35D comes into a partial contact state contacting the valve seat seal member 21. The relief valve 10E of the present embodiment also achieves the same operational effects as the relief valve 10A of the second embodiment.

### [Seventh embodiment]

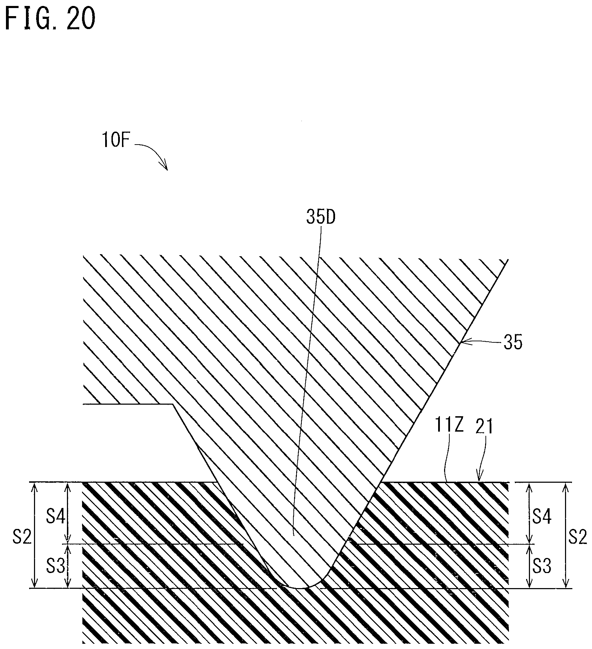

Hereinafter, a seventh embodiment of the present invention will be described with reference to FIG. 20. Although not illustrated in the drawing, the overall shape of a relief valve 10F of the present embodiment is the same as that of the relief valve 10 of the first embodiment, for example, and only the surface roughness of the annular contact portion 35D is different. That is, as illustrated in FIG. 20, the annular contact portion 35D of the relief valve 10F of the present embodiment has a triangular cross section, similarly to the relief valve 10 of the first embodiment, and bites into the valve seat seal member 21 from a distal end (lower end) to an intermediate position in the vertical direction. That is, of both inner and outer side surfaces of the annular contact portion 35D, a portion from the distal end of the annular contact portion 35D to the intermediate position in the vertical direction is a contact region S2 contacting the valve seat seal member 21. The surface roughness of the annular contact portion 35D is larger in a proximal end-side region S4 of the contact region S2 than in a distal end-side region S3. Specifically, the entire surface of the annular contact portion 35D except for the above-described distal end-side region S3 is a textured surface.

According to the relief valve 10F of the present embodiment, since the contact region S2 of the annular contact portion 35D in contact with the valve seat seal member 21 has a larger surface roughness on the proximal end side than on the distal end side, the resistance at the time of valve opening is reduced as compared with a case where the contact region S2 is in contact with the valve seat seal member 21 with the same surface roughness in the same manner. Note that the configuration of the annular contact portion 35D of the present embodiment may be applied to the relief valves 10A to 10E of the second to sixth embodiments.

### [Eighth embodiment]

Although not illustrated in the drawing, a relief valve of the present embodiment has the same shape as the relief valve 10A of the second embodiment, for example, and the surface roughness of the annular contact portion 35D is different so as to be unbalanced in the circumferential direction. The surface roughness of the annular contact portion 35D on one side from the center in the longitudinal direction of the rectangular shape that is the planar shape of the valve body 35 is rougher than the surface roughness of the annular contact portion 35D on the other side.

In the relief valve of the present embodiment, the annular contact portion 35D gradually separates from the valve seat seal member 21 from a portion having a rougher surface roughness, and the resistance at the time of valve opening is reduced. Note that the configuration of the annular contact portion 35D of the present embodiment may be applied to the relief valves 10 and 10B to 10F of the first and third to seventh embodiments.

### [Other embodiments]

(1) In the relief valves 10 to 10E of the above respective embodiments, the planar shapes of the valve seat 11Z and the valve body 35 are the rectangular shape, but are not limited thereto, and may be a polygonal shape other than the rectangular shape, a circular shape, an elliptical shape, or an irregular shape having no specific shaped surface.
(2) In the relief valves 10 to 10E of the above respective embodiments, the valve body 35 is supported linearly movably, but the valve body 35 may be rotated to be opened and closed, or the valve body 35 itself may be elastically deformed to move the annular contact portion, which is an outer edge of the valve body 35, toward and away from the valve seat 11Z.
(3) In the relief valves 10 to 10E of the above embodiments, the seal member (valve seat seal member 21) is provided in the valve seat 11Z out of the valve body 35 and the valve seat 11Z, but the seal member may be provided in the valve body 35.

Although specific examples of the technology included in the claims are disclosed in the present specification and the drawings, the technology described in the claims is not limited to these specific examples, and includes those obtained by variously modifying and changing the specific examples, and also includes those obtained by singly extracting a part from the specific examples without departing from the scope of the appended claims.

### DESCRIPTION OF THE REFERENCE NUMERALS

- 10, 10A to 10D: Relief valve
- 11: Base part
- 11Z: Valve seat
- 13, 13X: Valve hole
- 14: Attachment hole
- 14N: Female threaded portion
- 15: Nut
- 17: Annular seal member
- 18: Annular protrusion
- 19: Seal member mounting portion
- 20: Groove (recess)
- 21: Valve seat seal member
- 23: Fitting protrusion
- 23B: Protrusion
- 25: Valve body surrounding wall
- 26: First wall
- 27: Second wall
- 29: Drain hole
- 31: Shaft fitting portion
- 35: Valve body
- 35D: Annular contact portion
- 35F: Flange
- 35G: Fluid guide portion
- 35K: Obtuse angle portion
- 40: Shaft
- 40H: Hinge
- 40K: Slide support mechanism
- 45: Lateral-side guide portion
- 45A: Vertical surface
- 45B: Inclined surface
- 90: Container
- 92: Discharge hole
- 93: Attachment hole
- B: Bolt
- C1, C2, C3: Clearance
- S1: Installation space
- S2: Contact region

## Claims

1. A relief valve (10 to 10F) comprising:
a base part (11) including a valve hole (13) and a valve seat seal member (21) surrounding the valve hole (13);
a valve body (35) configured to reciprocate in a state of facing the valve hole (13) and including, in an outer edge, an annular contact portion (35D) to move toward and away from the valve seat seal member (21);
an annular protrusion (18) provided in an inner edge of the base part (11), the valve seat seal member (21) being fitted to an outer side of the annular protrusion (18), and an inner side of the annular protrusion (18) being the valve hole (13);
a recess (20) formed in a surface of the base part (11) on which the valve seat seal member (21) is laid; and
a fitting protrusion (23) provided on the valve seat seal member (21) and fitted to the recess (20), wherein
the valve seat seal member (21) includes a flat surface that faces the valve body (35) in a moving direction of the valve body (35) and that comes into contact with the annular contact portion (35D),
a distal end surface of the annular protrusion (18) facing the valve body (35) in the moving direction of the valve body (35) is positioned flush with the flat surface of the valve seat seal member (21) or ahead of the flat surface in a protruding direction of the annular protrusion (18),
a plurality of protrusions (23B) are provided on an inner side surface of the recess (20) or a side surface of the fitting protrusion (23), and the fitting protrusion (23) is press-fitted into the recess (20),
the recess (20) has a groove shape extending along a circumferential direction of the annular protrusion (18) or surrounding the annular protrusion (18),
the plurality of protrusions (23B) are formed on opposite side surfaces of the fitting protrusion (23) on the valve hole (13) side and an opposite side to the valve hole (13) side,
the plurality of protrusions (23B) extend along a fitting direction with respect to the recess (20), and
the plurality of protrusions (23B) are disposed to be deviated from each other on the opposite side surfaces of the fitting protrusion (23).

2. The relief valve (10 to 10F) according to claim 1, comprising a fluid guide portion (35G) provided at a position close to the outer edge of the valve body (35) and inclined to gradually separate from the valve seat seal member (21) in a passing direction of the valve hole (13) as away from the annular contact portion (35D) toward a central side of the valve hole (13).

3. The relief valve (10 to 10F) according to claim 1 or 2, wherein the valve body (35) has a shape, as a whole, bulging toward a side away from the valve hole (13).

## Patentansprüche

1. Entlastungsventil (10 bis 10F) mit:
einem Basisteil (11) mit einem Ventilloch (13) und einem Ventilsitzsitzbauteil (21), das das Ventilloch (13) umgibt;
einem Ventilkörper (35), der dazu ausgebildet ist, sich in einem Zustand, in dem er dem Ventilloch (13) gegenüberliegt, hin und her zu bewegen, und in einem äußeren Rand einen ringförmigen Kontaktabschnitt (35D) aufweist, zur Bewegung in Richtung des Ventilsitzsitzbauteils (21) und weg davon;
einem ringförmigen Vorsprung (18), der in einem inneren Rand des Basisteils (11) vorgesehen ist, welches Ventilsitzsitzbauteil (21) an einer äußeren Seite des ringförmigen Vorsprungs (18) angebracht ist, und eine innere Seite des ringförmigen Vorsprungs (18) das Ventilloch (13) ist;
einer Vertiefung (20), die in einer Oberfläche des Basisteils (11), auf die das Ventilsitzsitzbauteil (21) gelegt ist, ausgebildet ist; und
einem Anbringungsvorsprung (23), der an dem Ventilsitzsitzbauteil (21) vorgesehen und an der Vertiefung (20) angebracht ist, bei dem
das Ventilsitzsitzbauteil (21) eine flache Oberfläche aufweist, die dem Ventilkörper (35) in einer Bewegungsrichtung des Ventilkörpers (35) gegenüberliegt und die mit dem ringförmigen Kontaktabschnitt (35D) in Kontakt kommt,
eine distale Stirnfläche des ringförmigen Vorsprungs (18), die dem Ventilkörper (35) in der Bewegungsrichtung des Ventilkörpers (35) gegenüberliegt, bündig mit der flachen Oberfläche des Ventilsitzsitzbauteils (21) oder in einer Überstandsrichtung des ringförmigen Vorsprungs (18) vor der flachen Oberfläche positioniert ist,
eine Mehrzahl von Vorsprüngen (23B) auf einer innenseitigen Oberfläche der Vertiefung (20) oder einer seitlichen Oberfläche des Anbringungsvorsprungs (23) vorgesehen ist, und der Anbringungsvorsprung (23) in die Vertiefung (20) pressgepasst ist,
die Vertiefung (20) eine Nutform, die sich entlang einer Umfangsrichtung des ringförmigen Vorsprungs (18) erstreckt oder den ringförmigen Vorsprung (18) umgibt, aufweist,
die Mehrzahl von Vorsprüngen (23B) auf entgegengesetzten seitlichen Oberflächen des Anbringungsvorsprungs (23) auf der Seite des Ventillochs (13) und einer zu der Seite des Ventillochs (13) entgegengesetzten Seite ausgebildet ist,
sich die Mehrzahl von Vorsprüngen (23B) entlang einer Anbringungsrichtung in Bezug auf die Vertiefung (20) erstreckt, und
die Mehrzahl von Vorsprüngen (23B) so, dass sie voneinander abweichen, auf den entgegengesetzten seitlichen Oberflächen des Anbringungsvorsprungs (23) angeordnet ist.

2. Entlastungsventil (10 bis 10F) nach Anspruch 1, mit einem Fluidführungsabschnitt (35G), der an einer Position nahe an dem äußeren Rand des Ventilkörpers (35) vorgesehen und so geneigt ist, dass er sich graduell von dem Ventilsitzsitzbauteil (21) in einer Durchgangsrichtung des Ventillochs (13) weg von dem ringförmigen Kontaktabschnitt (35D) in Richtung einer mittleren Seite des Ventillochs (13) trennt.

3. Entlastungsventil (10 bis 10F) nach Anspruch 1 oder 2, bei dem der Ventilkörper (35) als Ganzes eine Form, die sich in Richtung einer Seite weg von dem Ventilloch (13) wölbt, aufweist.

## Revendications

1. Soupape de décharge (10 à 10F) comprenant :
une section de base (11) comprenant un trou de soupape (13) et un élément d'étanchéité de siège de soupape (21) entourant le trou de soupape (13) ;
un corps de soupape (35) configuré pour effectuer un mouvement de va-et-vient dans une position faisant face au trou de soupape (13) et comportant, au niveau d'un bord externe, une partie de contact annulaire (35D) destinée à se rapprocher et à s'éloigner de l'élément d'étanchéité de siège de soupape (21) ;
une saillie annulaire (18) disposée sur un bord interne de la section de base (11), l'élément d'étanchéité de siège de soupape (21) étant ajusté sur un côté externe de la saillie annulaire (18), et un côté interne de la saillie annulaire (18) constituant le trou de soupape (13) ;
un évidement (20) formé dans une surface de la section de base (11) sur laquelle l'élément d'étanchéité de siège de soupape (21) est posé ; et
une saillie d'ajustement (23) prévue sur l'élément d'étanchéité de siège de soupape (21) et ajustée à l'évidement (20), dans laquelle
l'élément d'étanchéité de siège de soupape (21) comprend une surface plane qui fait face au corps de soupape (35) dans la direction de déplacement du corps de soupape (35) et qui vient en contact avec la partie de contact annulaire (35D),
une surface d'extrémité distale de la saillie annulaire (18) faisant face au corps de soupape (35) dans la direction de déplacement du corps de soupape (35) est positionnée au ras de la surface plane de l'élément d'étanchéité de siège de soupape (21) ou en avant de la surface plane dans une direction de saillie de la saillie annulaire (18),
une pluralité de saillies (23B) sont prévues sur une surface latérale interne de l'évidement (20) ou sur une surface latérale de la saillie d'ajustement (23), et la saillie d'ajustement (23) est emboîtée à force dans l'évidement (20),
l'évidement (20) a une forme de rainure s'étendant dans une direction circonférentielle de la saillie annulaire (18) ou entourant la saillie annulaire (18),
la pluralité de saillies (23B) est formée sur les surfaces latérales opposées de la saillie d'ajustement (23) du côté du trou de soupape (13) et du côté opposé au trou de soupape (13),
la pluralité de saillies (23B) s'étend dans une direction d'ajustement par rapport à l'évidement (20), et
la pluralité de saillies (23B) est disposée de manière à être décalée les unes par rapport aux autres sur les surfaces latérales opposées de la saillie d'ajustement (23).

2. Soupape de décharge (10 à 10F) selon la revendication 1, comprenant une partie de guidage de fluide (35G) prévue à une position proche du bord externe du corps de soupape (35) et inclinée de manière à s'éloigner progressivement de l'élément d'étanchéité de siège de soupape (21) dans une direction de passage du trou de soupape (13), en s'éloignant de la partie de contact annulaire (35D) vers un côté central du trou de soupape (13).

3. Soupape de décharge (10 à 10F) selon la revendication 1 ou 2, dans laquelle le corps de soupape (35) présente une forme, dans son ensemble, bombée vers un côté éloigné du trou de soupape (13).
